# DEMANDE DE BREVET EUROPEEN

(11) **EP 4 789 519 A1**
(43) Date de publication de la demande: **12.08.2026**
(21) Numéro de dépôt: 26155690.6
(22) Date de dépôt: 02.02.2026
(51) Int. Cl.: A01B 29/04

(54) **MODULE DE COMPACTAGE POUR MACHINE AGRICOLE DE TRAVAIL DU SOL, MACHINE AGRICOLE DE TRAVAIL DU SOL ET PROCÉDÉ DE DÉCALAGE D'AU MOINS UNE ROUE DE COMPACTAGE D'UN MODULE DE COMPACTAGE**

(30) Priorité: 05.02.2025 FR 2501193
(71) Demandeur: Kuhn SAS, 67700 Saverne (FR)
(72) Inventeur: KIRCH, Michel, 67260 Keskastel (FR)

(57) **Abrégé**

Module de compactage pour machine agricole de travail du sol, machine agricole de travail du sol et procédé de décalage d'au moins une roue de compactage d'un module de compactage

L'invention concerne un module de compactage pour machine agricole de travail du sol comprenant une première unité (1) de compactage comportant un premier ensemble (E1) de roues de compactage (2), et une deuxième unité (4) de compactage comportant un deuxième ensemble (E2) de roues de compactage (2), la première unité (1) étant montée mobile en rotation par rapport à la deuxième unité (4) entre une position de travail (P1) dans laquelle les première et deuxième unités (1, 4) sont disposées à l'horizontale et une position repliée dans laquelle la première unité (1) est basculée vers la deuxième unité (4), caractérisé en ce qu'il comprend un dispositif de décalage (7) d'une roue de compactage (2) comprenant un variateur de position (8) pour, lors du passage de la position de travail (P1) vers la position replié ou inversement, faire varier la position d'une deuxième roue extrêmale (9) de la première unité (1) qui est voisine d'une première roue extrêmale (10) de la deuxième unité (4) selon un mouvement de translation dans une première direction de translation parallèlement à la première direction axiale et/ou selon un mouvement de rotation autour d'un premier axe de rotation (A1).

## Description

L'invention concerne le domaine du travail du sol et du semis de manière générale.

L'invention concerne plus particulièrement un module de compactage pour machine agricole de travail du sol, une machine agricole de travail du sol de type semoir et un procédé de décalage de roue de compactage.

Certains semoirs comprennent des trains de roues pneumatiques formant un module de compactage et étant situés avant les éléments semeurs qui viennent implanter les graines dans le sol. De tels trains de roues pneumatiques servent notamment à rappuyer le sol après qu'il a été travaillé par un jeu d'outils de travail du sol en amont, par exemple des disques ou des dents, et avant que les graines soient implantées à l'aide des éléments semeurs.

Un train de roues pneumatiques s'étend habituellement sur toute la largeur de travail du semoir et comprend plusieurs roues pneumatiques situées les unes à côté des autres. La plupart du temps, leur nombre et leur position correspond aux passages des éléments semeurs qui suivent.

La largeur de travail de ces semoirs peut dépasser les neuf mètres, ils sont donc repliables en plusieurs sections pour le transport. Le semoir comprend généralement une section latérale gauche et une section latérale droite de part et d'autre d'une section centrale fixe. Les sections latérales gauches et droites sont repliables de part et d'autre de la section centrale fixe. Les roues pneumatiques présentes sur cette section centrale servent également de train de roulement pour les déplacements sur route.

En outre, un semoir respecte de préférence certaines contraintes, telles que le gabarit routier européen normé imposant au maximum trois mètres de large et quatre mètres de hauteur, l'espacement entre les roues pneumatiques qui est défini par l'espacement voulu au semis et qui reste le même sur les trois sections et le diamètre des roues pneumatiques qui doit présenter un grand diamètre, c'est-à-dire un diamètre d'au moins 800 millimètres. Ce diamètre apporte différents avantages agronomiques et mécaniques comme la répartition des masses, l'effort de traction, etc.

Dans certaines configurations, le semoir peut combiner un faible écartement des éléments semeurs adjacents, c'est-à-dire donc un faible écartement entre les roues pneumatiques adjacentes qui reste le même sur les trois sections, un grand diamètre des roues pneumatiques et une grande largeur de travail. Dans ce cas, des interférences/collisions au repliage peuvent survenir ce qui n'est pas souhaitable. En effet, notamment lors du repliage, les roues pneumatiques les plus à l'intérieur sur les sections latérales viennent en contact avec les roues les plus à l'extérieur de la section centrale.

Afin de résoudre cette problématique, la réduction du diamètre des roues pneumatiques n'est pas envisageable car elle engendrerait la perte des avantages agronomiques du semoir. Il n'est pas non plus envisageable de décaler l'ensemble de la section latérale pour éviter l'interférence car le gabarit en hauteur une fois replié ne serait plus respecté.

La publication DE102012214615B4 divulgue déjà une machine agricole de travail du sol et/ou de semis avec au moins des outils de travail du sol et des éléments pneumatiques répartis sur la largeur de la machine. La machine est divisée en au moins trois sections, une centrale et deux latérales qui pivotent selon un axe horizontal dans le sens d'avance. Les éléments pneumatiques d'au moins une section latérale peuvent se déplacer et/ou coulisser dans une direction d'avance de la machine. Dans cet exemple, pour éviter les collisions au repliage, un déplacement total des sections latérales du train de pneus est effectué préalablement dans la direction d'avance de la machine. Cette solution est complexe et coûteuse à mettre en œuvre.

La présente invention a pour but de pallier au moins l'un de ces inconvénients et vise à proposer une solution alternative de module de compactage pour machine agricole de travail du sol qui permette notamment d'éviter les collisions lors du repliage.

A cet effet, l'invention concerne un module de compactage pour machine agricole de travail du sol comprenant au moins :
- une première unité de compactage comportant un premier ensemble de roues de compactage montées parallèles entre elles autour d'au moins une première direction axiale sur un premier support, et
- une deuxième unité de compactage comportant un deuxième ensemble de roues de compactage montées parallèles entre elles autour d'au moins une deuxième direction axiale sur un deuxième support,
- la première unité étant montée mobile en rotation autour d'un premier axe de pivotement par rapport à la deuxième unité par au moins une articulation entre une position de travail dans laquelle les première et deuxième unités sont disposées à l'horizontale avec les première et deuxième directions axiales parallèles entre elles et une position repliée dans laquelle la première unité est basculée autour de l'axe de pivotement vers la deuxième unité,
le module de compactage est caractérisé en ce qu'il comprend au moins :
- un dispositif de décalage d'au moins une roue de compactage comprenant au moins un variateur de position de préférence monté sur le premier support et étant configuré pour, au moins lors du passage de la position de travail vers la position repliée ou inversement, faire varier au moins la position d'une deuxième roue extrémale de la première unité qui est voisine d'une première roue extrêmale de la deuxième unité selon un mouvement de translation dans une première direction de translation parallèlement à la première direction axiale et/ou selon un mouvement de rotation autour d'un premier axe de rotation.

L'invention concerne également une machine agricole de travail du sol comprenant au moins une pluralité d'outils de travail du sol et un module de compactage disposé en aval de la pluralité d'outils de travail du sol, caractérisé en ce que le module de compactage est selon l'invention.

L'invention concerne également un procédé de décalage d'au moins une roue de compactage d'un module de compactage selon l'invention, caractérisé en ce qu'il comprend au moins :
- une étape de repliage, lors de laquelle au moins la première unité est déplacée en rotation par rapport à la deuxième unité de la position de travail vers la position repliée, et/ou
- une étape de dépliage, lors de laquelle au moins la première unité est déplacée en rotation par rapport à la deuxième unité 4 de la position repliée vers la position de travail,
- une étape de décalage d'une roue de compactage, lors de laquelle le variateur de position fait varier au moins la position de la deuxième roue extrémale de la première unité qui est voisine de la première roue extrêmale de la deuxième unité selon le mouvement de translation dans la première direction de translation parallèlement à la première direction axiale et/ou selon le mouvement de rotation autour du premier axe de rotation,
- l'étape de décalage d'une roue de compactage est réalisée au moins lors de l'étape de repliage et/ou lors de l'étape de dépliage.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
[Fig. 1] la figure 1 est une vue en perspective d'une machine agricole de travail du sol avec un module de compactage comprenant une première unité dans une position de travail selon l'invention,
[Fig. 2] la figure 2 est une vue en perspective de la machine agricole de travail du sol illustrée à la figure 1 avec la première unité dans une position repliée selon l'invention,
[Fig. 3] la figure 3 est une vue de face du module de compactage comprenant la première unité dans la position de travail et montrant la deuxième roue extrémale de la première unité dans une position initiale selon l'invention,
[Fig. 4] la figure 4 est une vue de dessus du module de compactage comprenant la première unité dans la position de travail et montrant la deuxième roue extrêmale de la première unité dans la position initiale selon l'invention,
[Fig. 5] la figure 5 est une vue partielle en perspective de la première unité du module de compactage avec la deuxième roue extrêmale de la première unité dans la position initiale,
[Fig. 6] la figure 6 est une vue de face de la première unité du module de compactage avec la deuxième roue extrêmale de la première unité dans la position initiale,
[Fig. 7] la figure 7 est une vue de dessus de la première unité du module de compactage avec la deuxième roue extrêmale de la première unité dans la position initiale,
[Fig. 8] la figure 8 est une vue de face du module de compactage comprenant la première unité dans la position de travail et montrant la deuxième roue extrémale de la première unité dans une position anticollision selon l'invention,
[Fig. 9] la figure 9 est une vue de dessus du module de compactage comprenant la première unité dans la position de travail et montrant la deuxième roue extrêmale de la première unité dans la position anticollision selon l'invention,
[Fig. 10] la figure 10 est une vue en perspective de la première unité du module de compactage avec la deuxième roue extrêmale de la première unité dans la position anticollision,
[Fig. 11] la figure 11 est une vue de face de la première unité du module de compactage avec la deuxième roue extrêmale de la première unité dans la position anticollision,
[Fig. 12] la figure 12 est une vue de dessus de la première unité du module de compactage avec la deuxième roue extrêmale de la première unité dans la position anticollision,
[Fig. 13] la figure 13 est une vue de face du module de compactage comprenant la première unité dans une position intermédiaire entre la position repliée et la position de travail et montrant la deuxième roue extrêmale de la première unité dans la position anticollision selon l'invention,
[Fig. 14] la figure 14 est une vue de dessus du module de compactage comprenant la première unité dans une position intermédiaire entre la position repliée et la position de travail et montrant la deuxième roue extrêmale de la première unité dans la position anticollision selon l'invention,
[Fig. 15] la figure 15 est une vue en perspective du module de compactage comprenant la première unité dans la position repliée et montrant la deuxième roue extrêmale de la première unité dans la position anticollision selon l'invention, et
[Fig. 16] la figure 16 est une vue de face du module de compactage comprenant la première unité dans la position repliée et montrant la deuxième roue extrémale de la première unité dans la position anticollision selon l'invention.

Un module de compactage pour machine agricole de travail du sol comprend au moins :
- une première unité 1 de compactage comportant un premier ensemble E1 de roues de compactage 2 montées parallèles entre elles autour d'au moins une première direction axiale D1 sur un premier support 3, et
- une deuxième unité 4 de compactage comportant un deuxième ensemble E2 de roues de compactage 2 montées parallèles entre elles autour d'au moins une deuxième direction axiale D2 sur un deuxième support 5,
- la première unité 1 étant montée mobile en rotation autour d'un premier axe de pivotement AP1 par rapport à la deuxième unité 4 par au moins une articulation 6 entre une position de travail P1 dans laquelle les première et deuxième unités 1, 4 sont disposées à l'horizontale avec les première et deuxième directions axiales D1, D2 parallèles entre elles et une position repliée P2 dans laquelle la première unité 1 est basculée autour de l'axe de pivotement AP1 vers la deuxième unité 4.

Conformément à l'invention, le module de compactage est caractérisé en ce qu'il comprend au moins :
- un dispositif de décalage 7 d'au moins une roue de compactage 2 comprenant au moins un variateur de position 8 de préférence monté sur le premier support 3 et étant configuré pour au moins lors du passage de la position de travail P1 vers la position repliée P2 ou inversement faire varier au moins la position d'une deuxième roue extrêmale 9 de la première unité 1 qui est voisine d'une première roue extrêmale 10 de la deuxième unité 4 selon un mouvement de translation dans une première direction de translation parallèlement à la première direction axiale D1 et/ou selon un mouvement de rotation autour d'un premier axe de rotation A1.

La solution permet a minima lors du passage de la position de travail P1 vers la position repliée P2 ou inversement de faire varier au moins la distance d'espacement entre la première roue extrêmale 10 de la deuxième unité 4 et la deuxième roue extrêmale 9 de la première unité 1 sans avoir nécessairement à déplacer l'ensemble de la première unité 1 par rapport à la deuxième unité 4 comme c'est le cas dans l'art antérieur. Il est ainsi notamment possible de dévier temporairement la trajectoire de la deuxième roue extrêmale 9 de la première unité 1 pour éviter une zone de collision avec la première roue extrêmale 10 de la deuxième unité 4 lors du passage de la position de travail P1 vers la position repliée P2 ou inversement et cela préalablement à l'entrée de la deuxième roue extrêmale 9 de la première unité 1 dans la zone de collision en effectuant un mouvement de translation selon la première direction de translation et/ou un mouvement de rotation selon le première axe de rotation A1 à l'aide du variateur de position 8. La zone de collision correspond à un ensemble de positions de la deuxième roue extrêmale 9 de la première unité 1 dans lesquelles une collision avec la première roue extrêmale 10 de la deuxième unité 4 a lieu.

De préférence, le variateur de position 8 est configuré pour faire varier au moins la position de la deuxième roue extrêmale 9 de la première unité 1 entre au moins une position initiale PI dans laquelle la position de la deuxième roue extrêmale 9 de la première unité 1 est configurée pour compacter le sol de préférence en aval d'un outil de travail du sol 27 que comporte la machine agricole de travail du sol dans la position de travail P1 et une position anticollision PA dans laquelle la position de la deuxième roue extrêmale 9 de la première unité 1 est en dehors d'une zone de collision avec la première roue extrêmale 10 de la deuxième unité 4.

Avantageusement, la position initiale PI correspond à une position de la deuxième roue extrêmale 9 de la première unité 1 lui permettant de compacter ou rappuyer le sol de préférence en aval d'un outil de travail du sol 27 que comporte la machine agricole de travail du sol lorsque la première unité 1 est dans la position de travail P1. La position initiale PI peut être maintenue pendant une certaine durée lors du passage de la position de travail P1 vers la position repliée P2 ou inversement avant l'entrée dans la zone de collision. Lorsque la première unité 1 est dans la position de travail P1, la deuxième roue extrêmale 9 de la première unité 1 est de préférence dans la position initiale PI.

La position anticollision PA correspond à une position pour laquelle la deuxième roue extrémale 9 de la première unité 1 est en dehors d'une zone de collision avec la première roue extrêmale 10 de la deuxième unité 4, c'est-à-dire que dans cette position anticollision PA la deuxième roue extrémale 9 de la première unité 1 et la première roue extrémale 10 de la deuxième unité 4 ne viennent jamais en contact l'une avec l'autre lors du passage de la position de travail P1 vers la position repliée P2 ou inversement. La position anticollision PA est différente de la position initiale PI.

De préférence, le variateur de position 8 est configuré pour faire varier au moins la position de la deuxième roue extrêmale 9 de la première unité 1 de la position initiale PI vers la position anticollision PA au moins lors du passage de la position de travail P1 vers la position repliée P2 ou inversement ou dans la position de travail P1 et préalablement à l'entrée de la deuxième roue extrêmale 9 de la première unité 1 dans la zone de collision et/ou dans la position repliée P2.

Avantageusement, cette configuration permet de dévier la trajectoire de la deuxième roue extrêmale 9 de la première unité 1 pour éviter la zone de collision avec la première roue extrêmale 10 de la deuxième unité 4 lors du passage de la position de travail P1 vers la position repliée P2 ou inversement et préalablement à l'entrée de la deuxième roue extrêmale 9 de la première unité 1 dans la zone de collision et/ou dans la position repliée P2. Le décalage de la position de la deuxième roue extrémale 9 de la première unité 1 vers la position anticollision PA se fait de préférence lorsque ses roues de compactage 2 ne sont plus au sol, mais peut également se faire dans la position de travail P1 selon une autre possibilité de l'invention.

De préférence, le variateur de position 8 est configuré pour faire varier au moins la position de la deuxième roue extrêmale 9 de la première unité 1 de la position anticollision PA vers la position initiale PI, au moins lors du passage de la position de travail P1 vers la position repliée P2 ou inversement, et ultérieurement à l'entrée de la deuxième roue extrêmale 9 de la première unité 1 dans la zone de collision et/ou dans la position repliée P2.

Avantageusement, cette configuration permet notamment de replacer la deuxième roue extrémale 9 de la première unité 1 en position initiale PI tant que celle-ci n'est pas au sol en vue par exemple d'une opération de travail du sol. En effet, la deuxième roue extrêmale 9 de la première unité 1 peut ainsi reprendre sa position initiale PI de préférence avant de toucher le sol au moment du dépliage c'est-à-dire lors du passage de la position repliée P2 à la position de travail P1 car il devient plus complexe de faire varier la position une fois que les roues de compactage 2 de la première unité 1 sont au sol.

De préférence, le premier support 3 comprend une poutre support 11 s'étendant longitudinalement selon une direction longitudinale DL et une pluralité de bras 12 montés de préférence orthogonalement à la poutre support 11 portant chacun au moins une roue de compactage 2 montée en rotation autour de l'au moins une première direction axiale D1.

De préférence, le variateur de position 8 comprend au moins un actionneur 13 monté sur la poutre support 11 configuré pour actionner un bras extrémal 14 monté sur la poutre support 11 portant la deuxième roue extrêmale 9 de la première unité 1.

L'actionneur 13 permet par exemple lors du mouvement de translation que le bras extrêmal 14 se décale le long de la poutre support 11 pour que la deuxième roue extrêmale 9 de la première unité 1 s'éloigne ou se rapproche de la première roue extrêmale 10 de la deuxième unité 4. De manière alternative, l'actionneur 13 permet par exemple lors du mouvement de rotation que le bras extrêmal 14 soit pivoté pour que la deuxième roue extrémale 9 de la première unité 1 s'éloigne ou se rapproche de la première roue extrêmale 10 de la deuxième unité 4.

De préférence, l'actionneur 13 est commandé par une unité de commande (non représentée) qui fait partie du dispositif de décalage 7 ou non et qui peut être commune à celle permettant de commander la rotation de la première unité 1 lors du passage de la position de travail P1 vers la position repliée P2 ou inversement. La séquence de commande de l'actionneur 13 est de préférence incluse automatiquement avec la séquence de commande de repliage ou dépliage. Il en résulte dans ce cas que l'utilisateur n'a pas d'opération supplémentaire à effectuer.

De préférence, au moins dans la position initiale PI les bras 12, y compris le bras extrêmal 14, sont distants deux à deux d'un intervalle identique et dans la position anticollision PA l'intervalle entre le bras extrémal 14 et le bras 12 adjacent est inférieur à l'intervalle dans la position initiale PI.

De préférence, l'actionneur 13 comprend au moins un vérin hydraulique ou pneumatique ou électrique.

De préférence, le module de compactage comprend, en outre, une troisième unité 15 de compactage comportant un troisième ensemble de roues de compactage 2 montées parallèles entre elles autour d'au moins une troisième direction axiale sur un troisième support, la troisième unité 15 étant montée mobile en rotation autour d'un deuxième axe de pivotement parallèle au premier axe de pivotement AP1 par rapport à la deuxième unité 4 par au moins une articulation entre la position de travail P1 dans laquelle les première, deuxième et troisième unités 1, 4, 15 sont disposées à l'horizontale avec les première, deuxième et troisième directions axiales D1, D2, parallèles entre elles et la position repliée P2 dans laquelle la première unité 1 et la troisième unité 15 sont basculées vers la deuxième unité 4 autour respectivement des premier et deuxième axes de pivotement AP1 et le dispositif de décalage 7 d'au moins une roue de compactage 2 comprend au moins un variateur de position additionnel de préférence monté sur le troisième support et étant configuré pour au moins lors du passage de la position de travail P1 vers la position repliée P2 ou inversement, faire varier au moins la position d'une première roue extrêmale de la troisième unité 15 qui est voisine d'une deuxième roue extrêmale de la deuxième unité 4 selon un mouvement de translation dans une deuxième direction de translation parallèlement à la troisième direction axiale et/ou selon un mouvement de rotation autour d'un deuxième axe de rotation.

Avantageusement, dans cet exemple le module de compactage est réparti en trois unités différentes à savoir une première unité 1 formant une section latérale à droite, une deuxième unité 4 formant une section centrale fixe et une troisième unité 15 formant une section latérale à gauche. Les première et troisième unités latérales 1, 15 sont disposées de part et d'autre de la deuxième unité 4 centrale et sont mobiles par rapport à celle-ci. Bien entendu, cet exemple n'est pas limitatif.

Le module de compactage peut de manière générale comprendre une pluralité d'unités.

La troisième unité 15 présente de préférence une structure identique ou symétrique en miroir à la première unité 1.

Dans la position de travail P1, les première et deuxième unités 1, 4 et le cas échéant la troisième unité 15 sont disposées à l'horizontale.

Dans la position repliée P2, la première unité 1 et le cas échéant la troisième unité 15 est basculée vers la deuxième unité 4 et la première unité 1 et le cas échéant la troisième unité 15 est de préférence à la verticale et la deuxième unité 4 qui est fixe est à l'horizontale.

Dans la position intermédiaire Pint qui est entre la position de travail P1 et la position repliée P2 la première unité 1 et le cas échéant la troisième unité 15 est basculée vers la deuxième unité 4 d'un angle de repliage inférieur à 90 degrés.

De préférence, le premier axe de rotation A1 et le premier axe de pivotement AP1 sont à distance l'un de l'autre.

De préférence, le premier axe de rotation A1 et le premier axe de pivotement AP1 sont distincts.

De préférence, le premier axe de rotation A1 et le premier axe de pivotement AP1 ne sont pas confondus et ne sont pas parallèles entre eux.

De préférence, le premier axe de rotation A1 est à la verticale dans la position de travail P1.

De préférence, le premier axe de pivotement AP1 est à l'horizontale dans la position de travail P1.

Le variateur de position 8 est configuré pour faire varier au sein de la première unité 1 la position de l'au moins une deuxième roue extrêmale 9 de la première unité 1 par rapport au premier support 3 selon le mouvement de rotation autour du premier axe de rotation A1.

Cette position de l'au moins une deuxième roue extrêmale 9 de la première unité 1 correspond à la position relative de l'au moins une deuxième roue extrémale 9 par rapport au premier support 3.

La première unité 1 de compactage comporte le premier ensemble E1 de roues de compactage 2 montées parallèles entre elles autour d'au moins une première direction axiale D1 sur le premier support 3. Dans le premier ensemble E1, les roues de compactage 2 ne sont pas nécessairement montées chacune autour de la même première direction axiale D1. En effet, les roues de compactage 2 peuvent être montées chacune autour d'une première direction axiale D1 propre. Les premières directions axiales D1 sont de préférence toutes parallèles entre elles si la deuxième roue extrêmale 9 est dans la position initiale PI. En revanche si la deuxième roue extrêmale 9 est dans la position anticollision PA, sa première direction axiale D1 propre n'est pas nécessairement parallèle aux premières directions axiales D1 propres des autres roues de compactage 2 qui elles le sont. C'est notamment le cas lorsque le variateur de position 8 permet de faire varier la position de la deuxième roue extrêmale 9 selon le mouvement de rotation autour du premier axe de rotation A1.

Les roues de compactage 2 sont de préférence des roues pneumatiques montées sur des jantes. Elles peuvent alternativement être des roues pleines ou à bâtons, réalisées en métal ou en un matériau polymère, entourées ou non d'un bandage en caoutchouc.

De préférence, le premier support 3 comprend au moins la poutre support 11 s'étendant longitudinalement selon une direction longitudinale DL qui est de préférence parallèle aux premières directions axiales D1 au moins lorsque la deuxième roue extrêmale 9 est dans la position initiale PI.

Le premier support 3 comprend également de préférence une pluralité de bras 12 montés de préférence orthogonalement à la poutre support 11 portant chacun au moins une roue de compactage 2 montée en rotation autour de l'au moins une première direction axiale D1.

La poutre support 11 comporte par exemple un profilé métallique.

Un bras 12 comprend de préférence une première extrémité 16 reliée à la poutre support 11 par des moyens de fixation et une deuxième extrémité 17 située à l'opposé. La roue de compactage 2 ou la paire de roues de compactage 2 est de préférence montée en rotation autour d'un arbre transversal au bras 12 qui est selon la première direction axiale D1.

Dans l'exemple illustré dans les figures, le premier support 3 comprend cinq bras 12 dont un bras extrêmal 14. Le nombre de bras 12 n'est pas limitatif.

Le bras extrémal 14 a la particularité de porter la deuxième roue extrêmale 9. Il est de préférence monté à une extrémité 18 de la poutre support 11. Le bras extrémal 14 peut en outre être actionné par le variateur de position 8 de sorte à être rendu mobile en translation selon la première direction de translation et/ou en rotation autour du premier axe de rotation A1.

A l'exception du bras extrémal 14, les bras 12 sont de préférence montés en permanence orthogonalement à la poutre support 11. Le bras extrêmal 14 n'est pas nécessairement toujours monté orthogonalement à la poutre support 11. En effet, le bras extrêmal 14 n'est pas en permanence orthogonal à la poutre support 11 si le variateur de position 8 est configuré pour faire varier la position du bras extrémal 14 selon le mouvement de rotation autour du premier axe de rotation A1.

Chaque bras 12, y compris le bras extrémal 14, porte de préférence deux roues de compactage 2 disposées de part et d'autre du bras 12 et qui sont adjacentes et parallèles entre elles autour de la même première direction axiale D1.

Le premier ensemble E1 compte dans l'exemple illustré dix roues de compactage 2.

Les bras 12, y compris le bras extrêmal 14, sont de préférence équidistants deux à deux, lorsque la deuxième roue extrêmale 9 est dans la position initiale PI. En revanche, lorsque la deuxième roue extrêmale 9 est dans la position anticollision PA, la distance entre le bras extrémal 14 et le bras 12 adjacent diminue, tandis que les autres bras 12 restent deux à deux équidistants. La distance entre deux bras 12 est mesurée à la deuxième extrémité 17 des bras 12 qui n'est pas reliée à la poutre support 11.

Les bras 12 à l'exception du bras extrémal 14 peuvent être reliés entre eux par un profilé 19 par leurs deuxièmes extrémités 17, ce profilé 19 étant parallèle à la poutre support 11.

Le profilé 19 peut comprendre une butée 20 contre laquelle la deuxième extrémité 17 du bras extrêmal 14 vient en appui dans la position anticollision PA. La butée 20 est de préférence disposée à une extrémité 21 du profilé 19.

Le variateur de position 8 a pour fonction de faire varier au moins la position de la deuxième roue extrémale 9 de la première unité 1 qui est voisine de la première roue extrêmale 10 de la deuxième unité 4 selon le mouvement de translation dans la première direction de translation parallèlement à la première direction axiale D1 et/ou selon le mouvement de rotation autour d'un premier axe de rotation A1.

Si la position de la deuxième roue extrêmale 9 varie selon le mouvement de translation le long de la première direction de translation, alors celle-ci est parallèle de préférence au moins aux premières directions axiales D1 au moins des roues de compactage 2 mais pas nécessairement celle de la deuxième roue extrémale 9. La première direction de translation est de préférence parallèle à la direction longitudinale DL de la poutre support 11.

Le variateur de position 8 est en outre de préférence configuré pour faire varier la position de la deuxième roue extrêmale 9 de la première unité 1 de la position initiale PI vers la position anticollision PA ou inversement selon le mouvement de translation dans la première direction de translation parallèlement à la première direction axiale D1 et/ou selon le mouvement de rotation autour d'un premier axe de rotation A1. De préférence, lors du mouvement de la position initiale PI vers la position anticollision PA, la deuxième roue extrêmale 9 se rapproche de la roue de compactage 2 adjacente de la première unité 1 alors que celle-ci s'en éloigne lors du mouvement de la position anticollision PA vers la position initiale PI.

Le variateur de position 8 est de préférence monté sur le premier support 3.

Dans l'exemple illustré et qui est non limitatif, le variateur de position 8 comprend une platine 22 qui est monté fixement sur la poutre support 11. Le bras extrémal 14 est relié à la platine 22 par sa première extrémité 16 par une première liaison pivot 23 autour du premier axe de rotation A1 qui est dans une direction verticale relativement à la direction longitudinale DL. Plus précisément, le premier axe de rotation A1 est perpendiculaire à la direction d'extension longitudinale du bras extrêmal 14. Le variateur de position 8 comprend en outre un actionneur 13 de type vérin qui est également relié par sa première extrémité 24 à la platine 22 par une deuxième liaison pivot 25, et est d'autre part fixé par sa deuxième extrémité 26 sur le bras extrémal 14.

L'invention concerne également une machine agricole de travail du sol comprenant au moins une pluralité d'outils de travail du sol 27 et un module de compactage disposé en aval de la pluralité d'outils de travail du sol 27, caractérisé en ce que le module de compactage est selon l'invention et tel que décrit précédemment.

De préférence, les outils de travail du sol 27 comportent des disques 28.

En outre, la machine agricole de travail du sol peut comprendre des éléments semeurs 29 disposés de préférence en aval du module de compactage. Dans ce cas la machine agricole de travail du sol est de préférence de type semoir.

De préférence dans la machine agricole de travail du sol, le module de compactage est disposé pour rappuyer le sol après qu'il a été travaillé par la pluralité d'outils de travail du sol 27 comportant les disques 28 en amont et avant que les graines soient implantées à l'aide des éléments semeurs 29.

De préférence, les sections centrale et latérales de disques 28 et les sections centrale et latérales d'éléments semeurs 29 sont à l'horizontale lorsque la première unité 1 et le cas échéant la troisième unité 15 est dans la position de travail P1.

De préférence, dans la position repliée P2 de la première unité 1 et le cas échéant la troisième unité 15, les sections latérales de disques 28 et d'éléments semeurs 29 en regard des première et troisième unités 1, 15 sont disposées à la verticale, sensiblement perpendiculairement à la deuxième unité 4 qui est à l'horizontale ainsi que la section centrale d'éléments semeurs 29 en regard de la deuxième unité 4 qui est également à l'horizontale. La section centrale de disques 28 en regard de la deuxième unité 4 est de préférence à la verticale.

De préférence, les outils de travail du sol 27 et les éléments semeurs 29 sont fixés sur le premier support 3 et/ou le deuxième support 5 et/ou le troisième support.

Plus particulièrement, la section centrale de disques 28 et les sections latérales de disques 28 sont fixées sur le premier support 3 et le cas échéant sur le troisième support par exemple au niveau de la poutre support 11. En outre, de préférence, les sections latérales d'éléments semeurs 29 sont fixées sur le premier support 3 et le cas échéant sur le troisième support par exemple au niveau du profilé 19 et la section centrale d'éléments semeurs 29 est fixée sur le deuxième support 5.

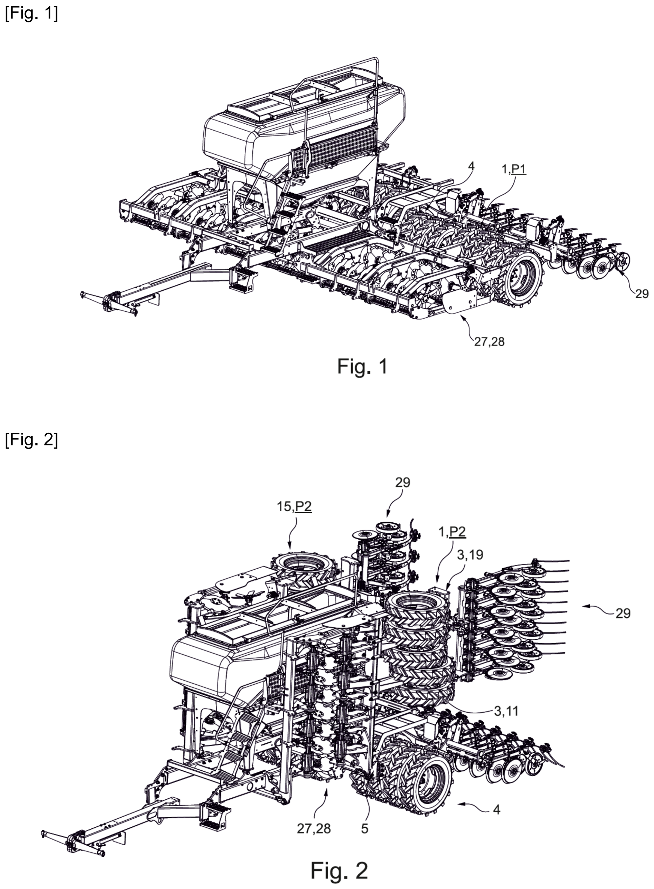

Les figures 1 et 2 illustrent une machine agricole de travail du sol selon l'invention de type semoir avec un module de compactage selon l'invention qui est muni d'une première unité 1 formant une section latérale droite, d'une deuxième unité 4 formant une section centrale fixe et d'une troisième unité 15 formant une section latérale gauche. La deuxième unité 4 est centrale et garde une position identique dans les figures 1 et 2, tandis que les première et troisième unités 1, 15 sont mobiles entre la position de travail P1 et la position repliée P2. La machine agricole de travail du sol comprend en outre une pluralité d'outils de travail du sol 27 comportant des disques 28 en amont du module de compactage et des éléments semeurs 29 en aval du module de compactage.

La machine agricole de travail du sol illustrée à la figure 1 est configurée pour effectuer un travail du sol, la première unité 1 et la troisième unité 15 sont disposées dans la position de travail P1. Les première, deuxième et troisième unités 1, 4, 15 sont disposées à l'horizontale. En outre, le module de compactage illustré à la figure 1 est disposé pour rappuyer le sol après qu'il a été travaillé par une pluralité d'outils de travail du sol 27 comportant les disques 28 en amont et avant que les graines soient implantées à l'aide des éléments semeurs 29. Ainsi, les sections centrale et latérales de disques 28 et les sections centrale et latérales d'éléments semeurs 29 sont également à l'horizontale dans la figure 1.

La machine agricole de travail du sol illustrée à la figure 2 est configurée pour le transport et présente un gabarit routier, la première unité 1 et la troisième unité 15 sont disposées dans la position repliée P2. Elles sont disposées à la verticale, sensiblement perpendiculairement à la deuxième unité 4 qui reste à l'horizontale. En outre, les sections latérales de disques 28 et d'éléments semeurs 29 en regard des première et troisième unités 1, 15 sont disposées à la verticale, sensiblement perpendiculairement à la deuxième unité 4 qui est à l'horizontale ainsi que la section centrale d'éléments semeurs 29 en regard de la deuxième unité 4 qui est également à l'horizontale. La section centrale de disques 28, qui est en regard de la deuxième unité 4 dans la position de travail P1, est à la verticale.

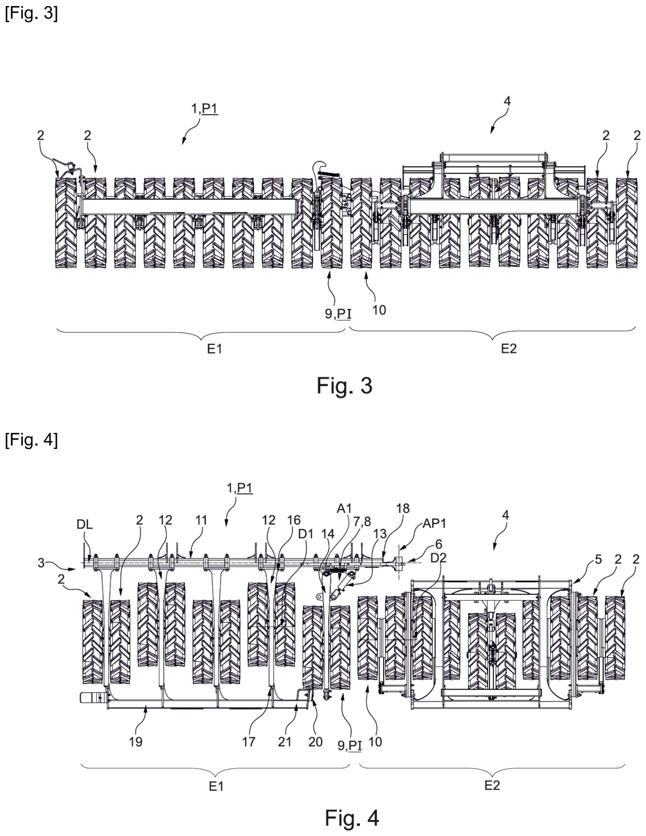

Les figures 3 à 4 illustrent le module de compactage comprenant la première unité 1 dans la position de travail P1 et la deuxième unité 4. Les première et deuxième unités 1, 4 sont à l'horizontale. La deuxième roue extrêmale 9 de la première unité 1 est en outre dans la position initiale PI. La deuxième roue extrémale 9 de la première unité 1 est voisine de la première roue extrêmale 10 de la deuxième unité 4 et est à distance de celle-ci. La première unité 1 comporte le premier ensemble E1 de roues de compactage 2 qui sont montées sur le premier support 3 et la deuxième unité 4 comporte le deuxième ensemble E2 de roues de compactage 2 qui sont montées sur le deuxième support 5. Le premier ensemble E1 et le deuxième ensemble E2 comptent chacun dix roues de compactage 2. Le premier support 3 comprend la poutre support 11 s'étendant longitudinalement selon la direction longitudinale DL qui est parallèle aux premières directions axiales D1 et cinq bras 12 montés sur la poutre support 11 portant chacun deux roues de compactage 2 qui sont adjacentes et parallèles entre elles autour de la même première direction axiale D1 propre. Chaque bras 12 comprend la première extrémité 16 reliée à la poutre support 11 et la deuxième extrémité 17 située à l'opposé. Le bras extrêmal 14 a la particularité de porter la deuxième roue extrêmale 9. Il est monté à l'extrémité 18 de la poutre support 11. Le bras extrêmal 14 peut en outre être actionné par le variateur de position 8 de sorte à être rendu mobile en rotation autour du premier axe de rotation A1. A l'exception du bras extrémal 14, les bras 12 sont montés en permanence orthogonalement à la poutre support 11, ce qui n'est pas le cas du bras extrémal 14, car le variateur de position 8 est configuré pour faire varier la position du bras extrémal 14 selon le mouvement de rotation autour du premier axe de rotation A1. Cependant, dans cette position initiale P1, le bras extrêmal 14 est aussi monté orthogonalement. Le variateur de position 8 comprend notamment un actionneur 13 monté sur la poutre support 11 configuré pour actionner le bras extrêmal 14. Les bras 12, y compris le bras extrêmal 14, sont équidistants deux à deux. Les bras 12 à l'exception du bras extrémal 14 sont reliés entre eux par le profilé 19 et par leurs deuxièmes extrémités 17, ce profilé 19 étant parallèle à la poutre support 11. Le profilé 19 comprend la butée 20 située à distance de la deuxième extrémité 17 du bras extrêmal 14. La butée 20 est disposée à l'extrémité 21 du profilé 19.

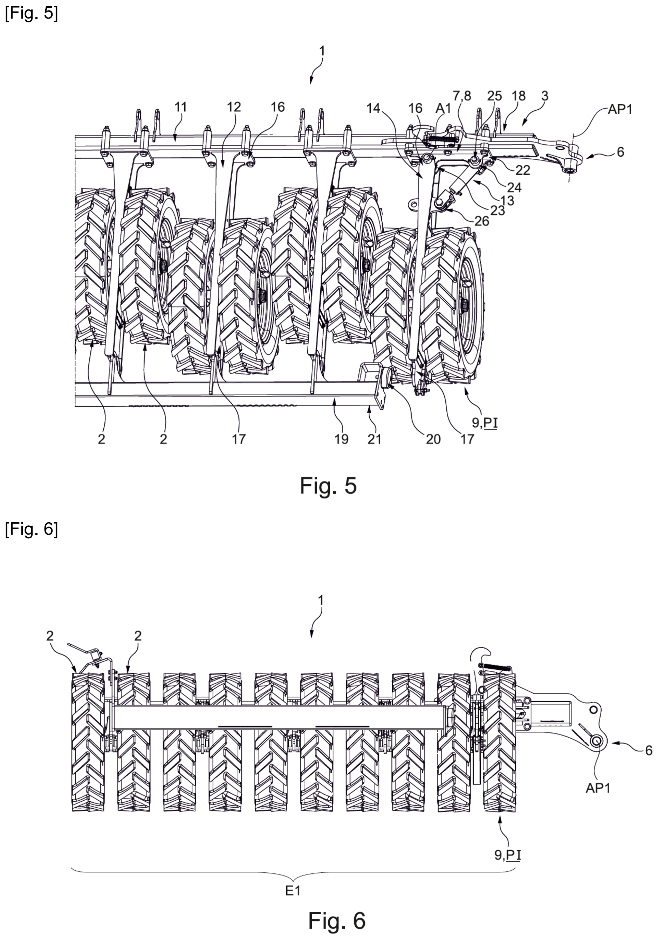

Les figures 5 à 7 illustrent la première unité 1 du module de compactage qui a été décrite précédemment en relation avec les figures 3 et 4. On observe plus en détail que le variateur de position 8 comprend une platine 22 montée fixement sur la poutre support 11. Le bras extrêmal 14 est relié à la platine par sa première extrémité 16 par une première liaison pivot 23 autour du premier axe de rotation A1. Le premier axe de rotation A1 est perpendiculaire à la direction d'extension longitudinale du bras extrémal 14. Le variateur de position 8 comprend en outre l'actionneur 13 de type vérin qui est également relié par sa première extrémité 24 à la platine 22 par une deuxième liaison pivot 25 et est d'autre part fixé par sa deuxième extrémité 26 sur le bras extrêmal 14.

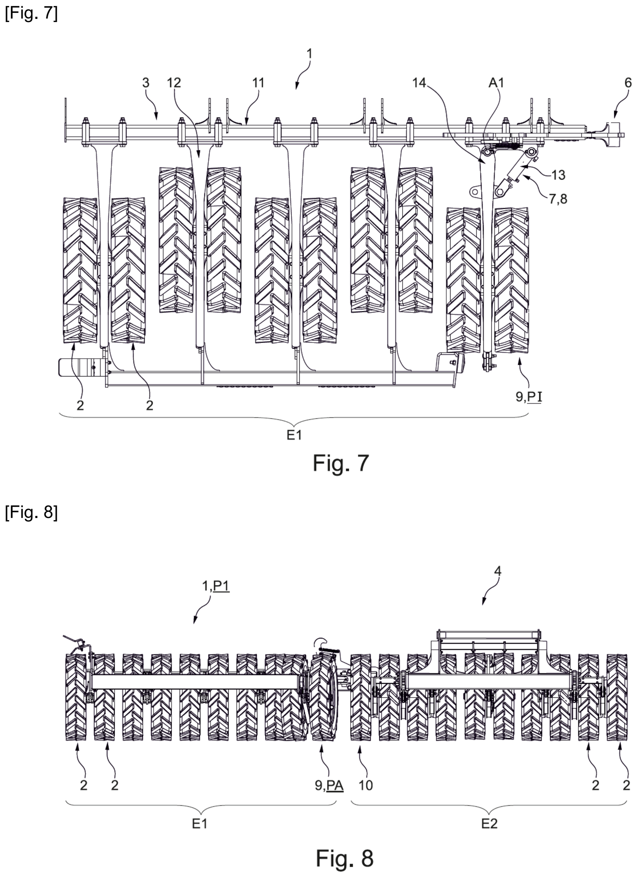

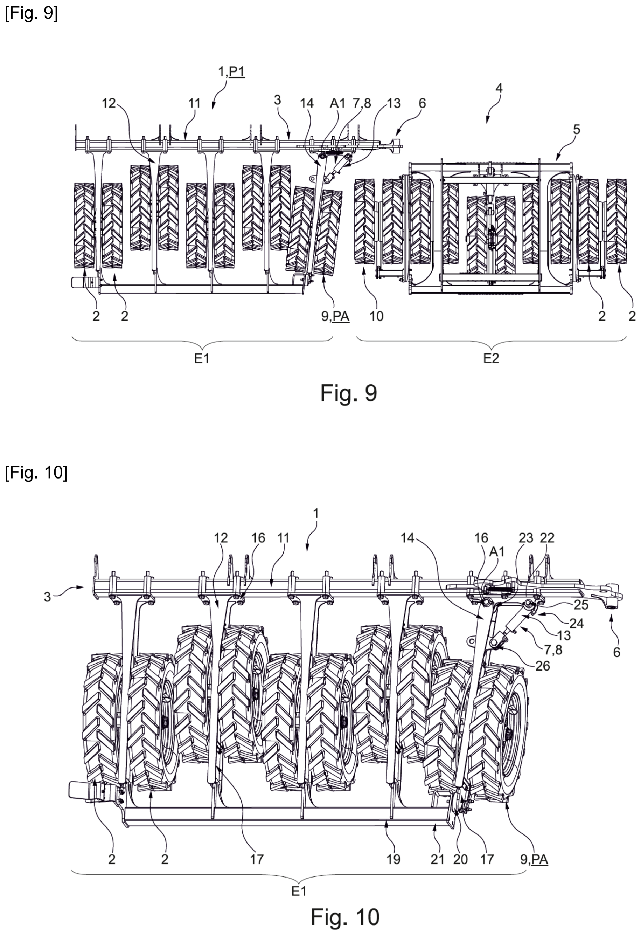

Les figures 8 et 9 illustrent le module de compactage comprenant la première unité 1 dans la position de travail P1 et la deuxième unité 4. Les première et deuxième unités 1, 4 sont à l'horizontale. La deuxième roue extrêmale 9 de la première unité 1 est en outre dans la position anticollision PA. Cette configuration possible n'est pas envisagée dans la pratique et est détaillée à des visées explicatives, car en pratique le décalage de la position de la deuxième roue extrêmale 9 de la première unité 1 vers la position anticollision PA se fait de préférence lorsque ses roues de compactage 2 ne sont plus au sol. La deuxième roue extrêmale 9 de la première unité 1 est voisine de la première roue extrêmale 10 de la deuxième unité 4 et est davantage à distance de celle-ci que lorsque celle-ci est dans la position initiale P1. La distance entre le bras extrémal 14 et le bras 12 adjacent est également inférieure à celle dans la position initiale PI, tandis que les autres bras 12 restent deux à deux équidistants. La deuxième roue extrêmale 9 est davantage rapprochée de la roue de compactage 2 adjacente de la première unité 1 que dans la position initiale PI. La deuxième extrémité 17 du bras extrêmal 14 vient en appui contre la butée 20.

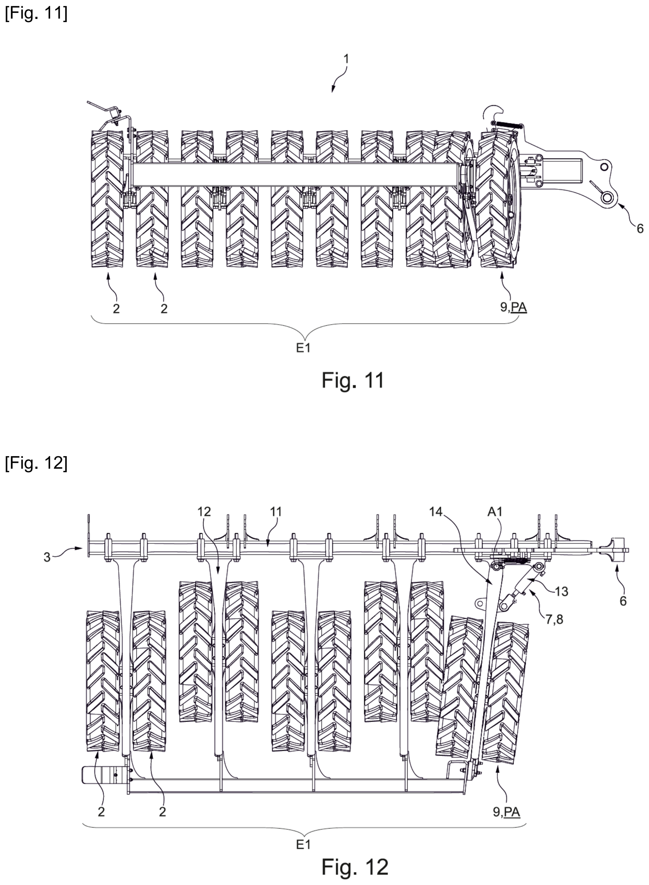

Les figures 10 à 12 illustrent la première unité 1 du module de compactage qui a été décrite précédemment en relation avec les figures 8 et 9.

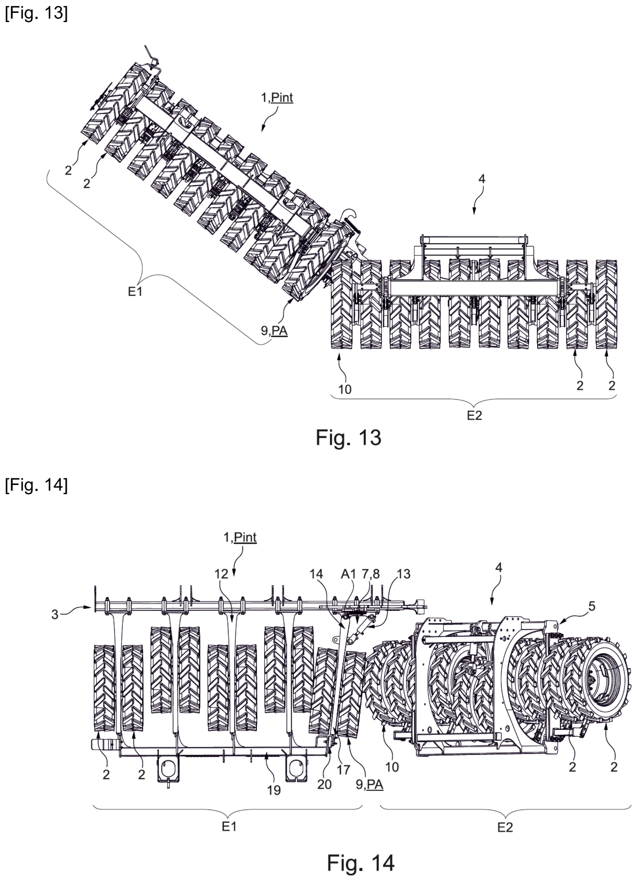

Les figures 13 et 14 illustrent le module de compactage comprenant la première unité dans une position intermédiaire Pint entre la position repliée P2 et la position de travail P1 et montrant la deuxième roue extrémale 9 de la première unité 1 dans la position anticollision PA. La première unité 1 est inclinée d'un angle de repliage inférieur à 90 degrés par rapport à la deuxième unité 4 qui est à l'horizontale. La deuxième roue extrêmale 9 de la première unité 1 et la première roue extrêmale 10 de la deuxième unité 4 sont toujours à distance ce qui évite une collision entre celles-ci. La deuxième extrémité 17 du bras extrémal 14 vient en appui contre la butée 20.

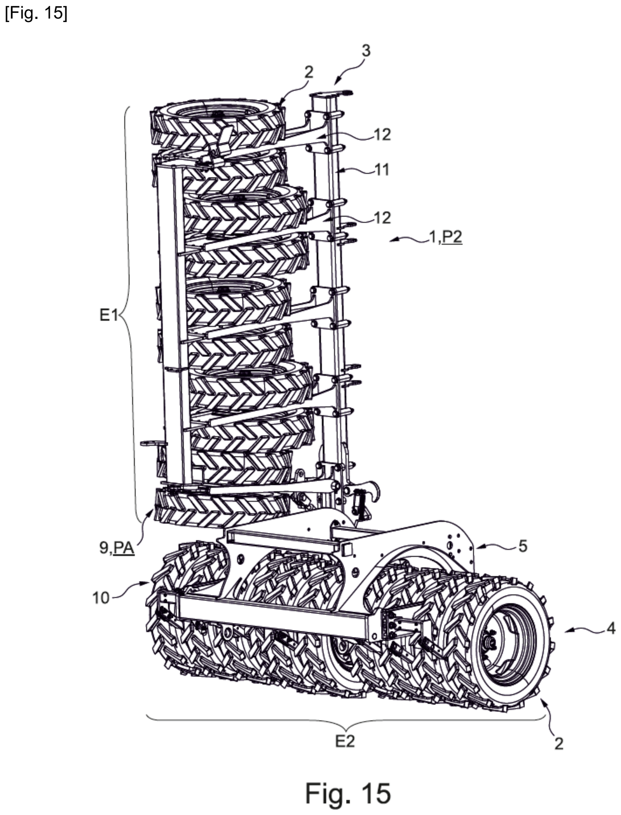

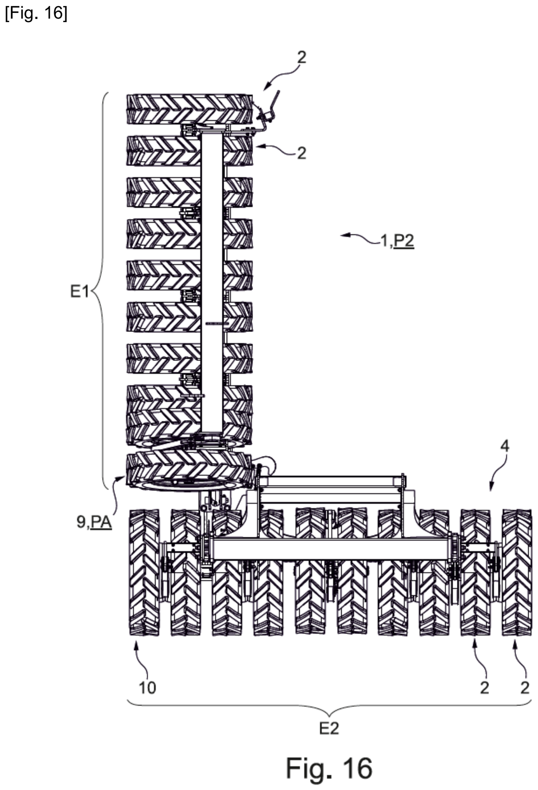

Les figures 15 et 16 illustrent le module de compactage comprenant la première unité 1 dans la position repliée P2 et montrant la deuxième roue extrêmale 9 de la première unité 1 dans la position anticollision PA. La première unité 1 est à la verticale, c'est à dire pivotée d'un angle de repliage sensiblement égal à 90 degrés par rapport à la deuxième unité 4 qui est à l'horizontale. La deuxième roue extrémale 9 de la première unité 1 et la première roue extrêmale 10 de la deuxième unité 4 sont toujours à distance ce qui évite une collision entre celles-ci.

L'invention concerne également un procédé de décalage d'au moins une roue de compactage d'un module de compactage selon l'invention , caractérisé en ce qu'il comprend au moins :
- une étape de repliage, lors de laquelle au moins la première unité 1 est déplacée en rotation par rapport à la deuxième unité 4 de la position de travail P1 vers la position repliée P2, et/ou
- une étape de dépliage, lors de laquelle au moins la première unité 1 est déplacée en rotation par rapport à la deuxième unité 4 de la position repliée P2 vers la position de travail P1,
- une étape de décalage d'une roue de compactage, lors de laquelle le variateur de position 8 fait varier au moins la position de la deuxième roue extrêmale 9 de la première unité 1 qui est voisine de la première roue extrêmale 10 de la deuxième unité 4 selon le mouvement de translation dans la première direction de translation parallèlement à la première direction axiale D1 et/ou selon le mouvement de rotation autour du premier axe de rotation A1,
l'étape de décalage d'une roue de compactage est réalisée au moins lors de l'étape de repliage et/ou lors de l'étape de dépliage.

De préférence, lors de l'étape de décalage d'une roue de compactage, le variateur de position 8 fait varier au moins la position de la deuxième roue extrémale 9 de la première unité 1 entre au moins la position initiale **PI** dans laquelle la position de la deuxième roue extrêmale 9 de la première unité 1 est configurée pour compacter le sol de préférence en aval d'un outil de travail du sol 27 dans la position de travail P1 et la position anticollision PA dans laquelle la position de la deuxième roue extrêmale 9 de la première unité 1 est en dehors d'une zone de collision avec la première roue extrêmale 10 de la deuxième unité 4.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Module de compactage pour machine agricole de travail du sol comprenant au moins :
- une première unité (1) de compactage comportant un premier ensemble (E1) de roues de compactage (2) montées parallèles entre elles autour d'au moins une première direction axiale (D1) sur un premier support (3), et
- une deuxième unité (4) de compactage comportant un deuxième ensemble (E2) de roues de compactage (2) montées parallèles entre elles autour d'au moins une deuxième direction axiale (D2) sur un deuxième support (5),
- la première unité (1) étant montée mobile en rotation autour d'un premier axe de pivotement (AP1) par rapport à la deuxième unité (4) par au moins une articulation (6) entre une position de travail (P1) dans laquelle les première et deuxième unités (1, 4) sont disposées à l'horizontale avec les première et deuxième directions axiales (D1, D2) parallèles entre elles et une position repliée (P2) dans laquelle la première unité (1) est basculée autour de l'axe de pivotement (AP1) vers la deuxième unité (4),
le module de compactage est **caractérisé en ce qu'**il comprend au moins :
- un dispositif de décalage (7) d'au moins une roue de compactage (2) comprenant au moins un variateur de position (8) de préférence monté sur le premier support (3) et étant configuré pour, au moins lors du passage de la position de travail (P1) vers la position repliée (P2) ou inversement, faire varier au moins la position d'une deuxième roue extrêmale (9) de la première unité (1) qui est voisine d'une première roue extrêmale (10) de la deuxième unité (4) selon un mouvement de translation dans une première direction de translation parallèlement à la première direction axiale (D1) et/ou selon un mouvement de rotation autour d'un premier axe de rotation (A1).

2. Module de compactage selon la revendication 1, **caractérisé en ce que** le variateur de position (8) est configuré pour faire varier au moins la position de la deuxième roue extrêmale (9) de la première unité (1) entre au moins une position initiale (PI) dans laquelle la position de la deuxième roue extrêmale (9) de la première unité (1) est configurée pour compacter le sol de préférence en aval d'un outil de travail du sol (27) que comporte la machine agricole de travail du sol dans la position de travail (P1) et une position anticollision (PA) dans laquelle la position de la deuxième roue extrêmale 9 de la première unité (1) est en dehors d'une zone de collision avec la première roue extrêmale (10) de la deuxième unité (4).

3. Module de compactage selon la revendication 2, **caractérisé en ce que** le variateur de position (8) est configuré pour faire varier au moins la position de la deuxième roue extrêmale (9) de la première unité (1) de la position initiale (PI) vers la position anticollision (PA), au moins lors du passage de la position de travail (P1) vers la position repliée (P2) ou inversement, et préalablement à l'entrée de la deuxième roue extrêmale (9) de la première unité (1) dans la zone de collision et/ou dans la position repliée (P2).

4. Module de compactage selon la revendication 2, **caractérisé en ce que** le variateur de position (8) est configuré pour faire varier au moins la position de la deuxième roue extrémale (9) de la première unité (1) de la position anticollision (PA) vers la position initiale (PI), au moins lors du passage de la position de travail (P1) vers la position repliée (P2) ou inversement, et ultérieurement à l'entrée de la deuxième roue extrêmale (9) de la première unité (1) dans la zone de collision et/ou dans la position repliée (P2).

5. Module de compactage selon l'une quelconque des revendications 1 à 4, **caractérisé en ce que** le premier support (3) comprend une poutre support (11) s'étendant longitudinalement selon une direction longitudinale (DL) et une pluralité de bras (12) montés orthogonalement à la poutre support (11) portant chacun au moins une roue de compactage (2) montée en rotation autour de l'au moins une première direction axiale (D1).

6. Module de compactage selon la revendication 5, **caractérisé en ce que** le variateur de position (8) comprend au moins un actionneur (13) monté sur la poutre support (11) configuré pour actionner un bras extrêmal (14) monté sur la poutre support (11) portant la deuxième roue extrêmale (9) de la première unité (1).

7. Module de compactage selon l'une quelconque des revendications 5 à 6, **caractérisé en ce qu'**au moins dans la position initiale (PI) les bras (12), y compris le bras extrêmal (14), sont distants deux à deux d'un intervalle identique et **en ce que** dans la position anticollision (PA) l'intervalle entre le bras extrémal (14) et le bras (12) adjacent est inférieur à l'intervalle dans la position initiale (PI).

8. Module de compactage selon l'une quelconque des revendications 5 à 7, **caractérisé en ce que** l'actionneur (13) comprend au moins un vérin hydraulique ou pneumatique ou électrique.

9. Module de compactage selon l'une quelconque des revendications 1 à 8, **caractérisé en ce qu'**il comprend une troisième unité (15) de compactage comportant un troisième ensemble de roues de compactage (2) montées parallèles entre elles autour d'au moins une troisième direction axiale sur un troisième support, la troisième unité (15) étant montée mobile en rotation autour d'un deuxième axe de pivotement parallèle au premier axe de pivotement (AP1) par rapport à la deuxième unité (4) par au moins une articulation entre la position de travail (P1) dans laquelle les première, deuxième et troisième unités (1, 4, 15) sont disposées à l'horizontale avec les première, deuxième et troisième directions axiales (D1, D2), parallèles entre elles et la position repliée (P2) dans laquelle la première unité (1) et la troisième unité (15) sont basculées vers la deuxième unité (4) autour respectivement des premier et deuxième axes de pivotement (AP1) et le dispositif de décalage (7) d'au moins une roue de compactage (2) comprend au moins un variateur de position additionnel de préférence monté sur le troisième support et étant configuré pour, au moins lors du passage de la position de travail (P1) vers la position repliée (P2) ou inversement, faire varier au moins la position d'une première roue extrêmale de la troisième unité (15) qui est voisine d'une deuxième roue extrêmale de la deuxième unité (4) selon un mouvement de translation dans une deuxième direction de translation parallèlement à la troisième direction axiale et/ou selon un mouvement de rotation autour d'un deuxième axe de rotation.

10. Machine agricole de travail du sol comprenant au moins une pluralité d'outils de travail du sol (27) et un module de compactage disposé en aval de la pluralité d'outils de travail du sol (27), **caractérisé en ce que** le module de compactage est selon l'une quelconque des revendications 1 à 9.

11. Procédé de décalage d'au moins une roue de compactage d'un module de compactage selon l'une quelconque des revendications 1 à 9, **caractérisé en ce qu'**il comprend au moins :
- une étape de repliage, lors de laquelle au moins la première unité (1) est déplacée en rotation par rapport à la deuxième unité (4) de la position de travail (P1) vers la position repliée (P2), et/ou
- une étape de dépliage, lors de laquelle au moins la première unité (1) est déplacée en rotation par rapport à la deuxième unité (4) de la position repliée (P2) vers la position de travail (P1),
- une étape de décalage d'une roue de compactage, lors de laquelle le variateur de position (8) fait varier au moins la position de la deuxième roue extrêmale (9) de la première unité (1) qui est voisine de la première roue extrêmale (10) de la deuxième unité (4) selon le mouvement de translation dans la première direction de translation parallèlement à la première direction axiale (D1) et/ou selon le mouvement de rotation autour du premier axe de rotation (A1),
- l'étape de décalage d'une roue de compactage est réalisée au moins lors de l'étape de repliage et/ou lors de l'étape de dépliage.

12. Procédé de décalage d'au moins une roue de compactage selon la revendication 11, **caractérisé en ce que** lors de l'étape de décalage d'une roue de compactage, le variateur de position (8) fait varier au moins la position de la deuxième roue extrêmale (9) de la première unité (1) entre au moins la position initiale (PI) dans laquelle la position de la deuxième roue extrêmale (9) de la première unité (1) est configurée pour compacter le sol de préférence en aval d'un outil de travail du sol (27) dans la position de travail (P1) et la position anticollision (PA) dans laquelle la position de la deuxième roue extrêmale (9) de la première unité (1) est en dehors d'une zone de collision avec la première roue extrêmale (10) de la deuxième unité (4).
